# EUROPEAN PATENT SPECIFICATION

(11) **EP 2 376 298 B1**
(45) Date of publication and mention of the grant of the patent: **24.10.2012**
(21) Application number: 08876135.8
(22) Date of filing: 19.12.2008
(51) Int. Cl.: B60C 11/04, B60C 11/13

(54) **HEAVY LOAD PNEUMATIC TIRE**
SCHWERLASTLUFTREIFEN
PNEUMATIQUE POUR LOURDES CHARGES

(43) Date of publication of application: 19.10.2011
(73) Proprietor: Pirelli Tyre S.P.A., 20126 Milan (IT)
(72) Inventor: PIZZORNO, Tommaso, 20126 Milano (IT); ASCANELLI, Alessandro, 20126 Milano (IT)
(74) Representative: Lasca, Sergio
(86) International application number: PCT/IT2008/000778
(87) International publication number: WO 2010/070690

(56) References cited:
- GB-A- 903 389
- JP-A- 2006 056 480
- JP-A- 2007 210 568
- US-A1- 2008 093 000

## Description

The present invention relates to a tyre for wheels of vehicles.

More particularly, the present invention relates to a tyre for wheels of lorries of the type which are used out of town and are intended to operate for most of their working life on asphalted roads, but also on partially asphalted roads or on gravel tracks.

In particular, when travelling along this latter type of road surface (gravel tracks and partially asphalted roads) and/or when manoeuvring in goods depots where grit or small stones are present, it is possible that stones or grit may become wedged inside the circumferential and transverse grooves of the tread band.

The width of the grooves, which ranges between about 8 and 20 mm, is such that the stones are able to enter inside them easily, pushed by the pressure of the contact patch on the road surface, and remain trapped there. During rolling movement the centrifugal force alone is, in fact, insufficient to expel them.

During subsequent travel on compact asphalted or cement surfaces, the cyclical deformation of the tyre in the zone of contact with the ground (contact patch) pushes the stones against the bottom and the sides of the groove inside which they are trapped and may cause tears in the elastomer material (phenomenon known as "stone drilling"). These tears may turn into wide cracks which extend as far as the first belt ply of the tyre. In such a situation the tyre must be removed and repaired or replaced.

In order to overcome partially this drawback, it is known to provide on the bottom of the tread grooves projecting elements, known as "stone removers" in the sector, designed to prevent the stones, or more generally various material present on the road surface, from getting trapped and to help perform expulsion thereof.

EP 1 810 849 describes a tread band for tyres designed to increase the resistance to wear caused by the stones, while improving the performance on a snow-covered surface. A number of protrusions are arranged inside the grooves. Each protrusion has a height which is smaller than that of the groove. The protrusion has a main portion with a top portion and an inclined portion having an angle of inclination with the bottom portion of the groove of between 3 and 60°. The inclined portions are arranged in two mutually opposite directions with respect to the other protrusions, at least along the groove. According to the authors, a stone trapped inside the groove is displaced towards the top portion of the protrusion, via the inclined portion, and expelled from the groove. The protrusions are spaced from the walls of the groove and arranged at intervals inside the groove. According to the authors, the resistance to wear caused by the stones is improved, while improving the performance on a snow-covered surface.

EP 1 698 491 describes a tyre for heavy vehicles which is able to ensure both a good performance on wet surfaces as well as uniform wear. The tyre for heavy vehicles includes three main grooves which extend on the tread band in the circumferential direction and raised portions defined in these circumferential grooves. The mid-line of the main groove, which is the central one of the three grooves, is positioned on the equatorial line of the tread band, and a thin raised portion is sacrificed for non-uniform wear, extending only in the central portion of the main groove.

GB 903389, corresponding with the preamble of claim 1, describes a pneumatic tyre having a tread comprising sinuous or partially zig-zag circumferential grooves from the bases of which integrally project radially outwardly a series of stud-like projections which are spaced from each other and from the groove sidewalls, and at least some of which are circular in cross-section.

JP 2006-056480 describes a tread of a pneumatic tyre, in which projections are provided in parallel in the tyre circumferential direction. The projections are disposed in such a way that they are deflected right and left alternately to a width center line of the circumferential groove.

JP 2007-210568 describes a tyre tread in which a large number of first high and low protrusions are spaced apart in a tyre peripheral direction and formed on one wall surface of peripheral major grooves, and a large number of second high and low protrusions are spaced apart in the tyre peripheral direction on the other wall surface of the peripheral major grooves.

US 2008/093000 describes a tyre tread in which the bottom of the main groove extends in a zigzag manner in the tyre circumferential direction, the sidewalls of the main groove are provided with concave portions and convex portions, and the concave portions of at least one of the sidewalls of the main groove are provided with protrusions joined to the bottom of the main groove and to the sidewall.

### SUMMARY OF THE INVENTION

The Applicant has noted that separate projecting elements aligned along the centre line of the circumferential grooves, or continuous projecting elements arranged inside the grooves along this centre line, may produce cracks and tears inside the groove, owing to the presence of very small connecting radii between these projecting elements and the bottom of the grooves. These cracks and tears may spread over the entire tread band, affecting the integrity thereof.

The Applicant has found that it is possible to obtain a tyre which has optimum characteristics in terms of the expulsion of various material such as grit or small stones, using a tread pattern comprising circumferential grooves which have projecting elements not aligned with each other along the centre line of the groove, i.e. by arranging at least one first and at least one second plurality of projecting elements on opposite sides of the centre line of the circumferential groove.

The Applicant has noticed that projecting elements not aligned with each other along the centre line of the groove, in addition to solving positively the problem of expulsion of material, are useful for preventing initial cracking along the connecting radii which join together two adjacent projecting elements.

The projecting elements, in fact, are arranged inside the groove at a predefined circumferential distance. Assuming that the distance between two consecutive elements is the segment which joins them together, if the projecting elements are aligned along the centre line of the groove, the projection of the distance in the circumferential direction, which is an indicator of the efficiency of expulsion of stones, grit and/or other material from the tread grooves, coincides with the distance between the two projecting elements. In the case where the projecting elements are not aligned along the centre line, the projection of the distance in the circumferential direction is instead smaller than the distance between the two said elements. For the same distance measured in the circumferential direction between adjacent projecting elements, greater distances therefore exist between the elements and, consequently, greater connecting radii may be envisaged in the portions situated between the said elements. This advantageously results in a reduced formation of cracks and tears in the region of the projecting elements, without altering the efficiency of expulsion of stones, grit and/or other material.

The Applicant has also noticed that the non-aligned arrangement of the projecting elements on the centre line inside the circumferential grooves results in these projecting elements being connected to the walls of the grooves such as to reduce significantly the tension created between the walls and the bottom of these grooves.

The present invention therefore concerns, according to a first aspect thereof, a tyre for wheels of vehicles, comprising a carcass structure and a tread band comprising at least one circumferential groove having a centre line, in which said circumferential groove has at least one first and at least one second plurality of elements projecting from the bottom of said groove, distributed circumferentially inside said groove, said projecting elements comprise a top portion, and said top portions of said first and said second plurality are arranged on axially opposite sides of the centre line of said circumferential groove.

For the purposes of the present invention a top portion of a projecting element is the radially outermost portion of the said element. In the case where the projecting element has, as a top portion, a flat surface, the barycentre of this surface may be taken as a reference for the position of the top portion.

Again for the purposes of the present invention, the centre line is defined as being the locus of the points obtained by joining together the radially innermost points on the bottom of the groove (considered without projecting elements) along its circumferential extension.

In the case where the groove has a flat bottom, or does not have a single point which is radially more inner lying than the other points, the centre line is defined as being the locus of the points obtained by joining together the middle points on the bottom of the groove along its circumferential extension.

The projecting elements have sidewalls which are inclined with respect to a plane substantially parallel to the surface of the tread band. The angle of inclination of the sidewalls is greater than 25° and preferably greater than 30°. This angle of inclination is less than 55° and preferably less than 50°. For the same height of the projecting elements, angles of the walls with an inclination of less than 25° may result in a significant base dimension such as to reduce the working depth of the groove. On the other hand, for the same height of the projecting elements, having an angle of the inclined walls greater than 55° results in a very small base dimension. This may give rise to structural fragility of the projecting elements.

The projecting elements are preferably devoid of sharp edges and/or non-continuous zones (i.e. portions separate from each other). As a result it is possible to maintain effective expulsion of materials present on the road surface and reduce further the formation of cracks and/or tears resulting from the presence of sharp corners and/or non-continuous zones.

The projecting elements have a frustoconical shape. The frustoconical shape, in a preferred embodiment, has a radius connecting together the top base of the truncated cone and its sidewalls. Alternatively, the projecting elements have a conical shape. Both these shapes allow the elements to be connected effectively to the bottom of the groove and to its sidewalls. The conical shape has, in addition to the advantages of the frustoconical shape, the advantage of having an apex (which may be rounded), at the top, able to expel resiliently the materials.

In preferred embodiments, the projecting elements have at least one axis of symmetry. The top portion of a projecting element may be positioned along the axis of symmetry of the said element.

Preferably, said projecting elements have a height smaller than the depth of said circumferential groove. The height of a projecting element is the difference in the radial direction between the top portion of the said element and the radially innermost point of the circumferential groove.

Even more preferably, said projecting elements have a height less than or equal to two thirds of the depth of said circumferential groove.

It may also be envisaged that said projecting elements have a height greater than or equal to one third of the depth of said circumferential groove.

In a preferred embodiment, said projecting elements have a base dimension less than or equal to three quarters of the width of the bottom of the circumferential groove.

The width of the bottom of the groove is equal to a segment which is obtained by forming a line tangential to the radially innermost point of the said groove and substantially parallel to the tread band. The segment is obtained by extending the sidewalls of the circumferential groove and intersecting them with the tangential line formed previously. In the case of a flat groove bottom, the width of the bottom of the circumferential groove is substantially equal to the flat base of the said groove.

The base dimension of a projecting element is obtained by extending the sidewalls of the element and intersecting them with a base segment of the said element. The base segment is obtained by a line substantially parallel to the tread band and passing through the radially innermost point of the said element.

The projecting elements are preferably connected to the bottom of the circumferential groove by a first connecting radius. In addition and/or as an alternative, the projecting elements are connected to the sidewalls of the circumferential groove by a second connecting radius.

In a preferred embodiment these projecting elements are present in at least two circumferential grooves of said tread band.

Preferably, said circumferential grooves are arranged on opposite sides of the equatorial plane of the tread band.

More preferably, said circumferential grooves are the axially outermost grooves of the tread band. These circumferential grooves are in fact most subject to the internal lodging of material such as stones and/or grit.

Preferably, the circumferential grooves have sidewalls inclined with respect to the centre axis of the said circumferential groove. Preferably, the sidewalls of the circumferential grooves are inclined at an angle less than or equal to 20° with respect to the centre axis of the said groove. Advantageously the angle of inclination is greater than 5°.

The centre axis of the groove is the line substantially perpendicular to the bottom of the groove and passing through the radially innermost point of the said groove. In the case where the groove does not have a single point which is radially more inner lying than the other points, the centre axis passes through the middle point on the bottom of the groove.

The walls of the circumferential groove, in a particular embodiment, have angles of inclination which are different from each other.

Advantageously the projecting elements are distributed along the entire circumferential extension of said circumferential grooves. In this way the forces on the tread band are uniformly distributed, reducing the forces due to wear in the vicinity of the circumferential grooves.

Further characteristic features and advantages of the present invention will emerge more clearly from the following detailed description of a number of preferred embodiments of the tyre according to the present invention, with reference to the accompanying drawings. In these drawings:
- Figure 1 shows a cross-sectional view of the tread band according to Figure 2 and associated tyre;
- Figure 2 shows an extended plan view of a tread band according to a first embodiment of the invention;
- Figure 3 shows a cross-sectional view of a groove of the tread band according to Figure 2;
- Figure 4 shows an extended plan view of a tread band according to a second embodiment of the invention;
- Figure 5 shows a cross-sectional view of a groove of the tread band according to Figure 4;
- Figure 6 shows an extended plan view of a portion of a groove in a tread band according to a third embodiment of the invention;
- Figure 7 shows a cross-sectional view of the groove according to Figure 6;
- Figure 8 shows an extended plan view of a tread band according to an example of the invention.

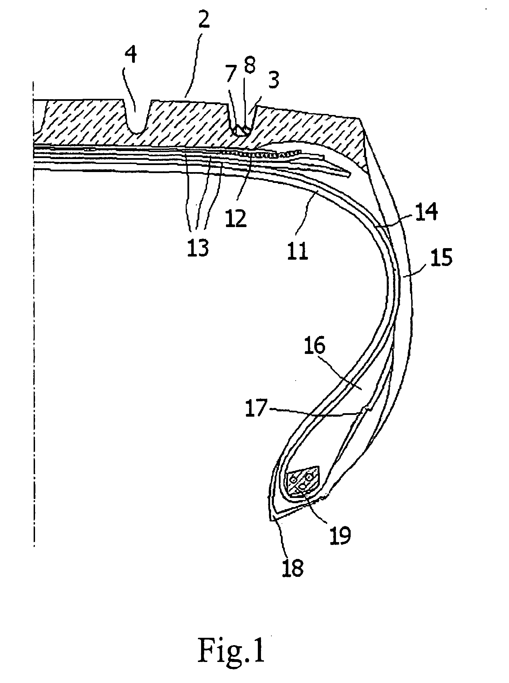

In Figure 1, 1 denotes overall a tyre for wheels of vehicles according to the present invention, in particular a tyre intended for mounting on the wheels of a heavy vehicles.

The tyre 1 comprises a carcass structure including at least one carcass ply 14 with a substantially toroidal form comprising typically metallic reinforcing cords incorporated in an elastomer matrix.

The tyre 1 also comprises a belt structure 13 which extends circumferentially around the carcass structure, a tread band 2 mounted in a circumferentially outer position on the belt structure 13 and a pair of sidewalls 15 mounted laterally, on opposite sides, on the carcass structure and each extending from a lateral edge of the tread band 2 as far as a point close to a radially inner edge of the said carcass structure. The sidewalls 15 and the tread band 2 essentially comprise at least one layer of elastomer material of suitable thickness.

It must be pointed out that, for the purposes of the present description, the term "elastomer material" is understood as meaning a composition comprising at least one elastomer polymer and at least one reinforcing filler. Preferably, this composition also comprises additives such as, for example, cross-linking agents and/or plasticisers. Owing to the presence of the cross-linking agents, by means of heating it is possible to crosslink this material so as to form the final article.

The carcass ply 14 has opposite terminal portions 17 engaged with respective bead wires 19. The latter are arranged in the zones 18 of the tyre 1 usually identified by the term "beads".

An elastomer filling 16 with a substantially triangular shape is applied onto the outer perimetral edge of the bead wires 19 and occupies the space defined between the carcass ply 14 and the respective terminal portion 17 of the carcass ply 14.

The beads 18 may be provided with additional reinforcing structures, not shown, which are not further described here since they are known to the person skilled in the art.

The belt structure 13 comprises preferably several belt layers arranged radially on top of each other and comprising typically metallic reinforcing chords directed in an intersecting manner with respect to the circumferential direction of the tyre 1.

Moreover, the belt structure 13 comprises a lateral reinforcing layer 12 in a radially outer position on the carcass ply 14. Said lateral reinforcing layer 12 generally comprises a plurality of reinforcing elements, typically metal cords with a predefined elongation at breakage value, arranged substantially in a circumferential direction (for example at an angle of less than 5° with respect to the circumferential direction).

The carcass ply 14 may be provided internally with a so-called liner, i.e. a thin layer of elastomer material 11 impermeable to air or other inflating fluid usually introduced into the tyre during use, extending over the inside of the radially inner surface of the carcass ply 14.

A series of circumferential grooves and incisions 3, 4, suitably arranged in a desired "tread pattern", are arranged over the radially outer surface area of the tread band 2 of the tyre 1.

The axially outermost groove 3 has two pluralities of projecting elements 7 and 8 arranged on opposite sides of the centre line of the said groove.

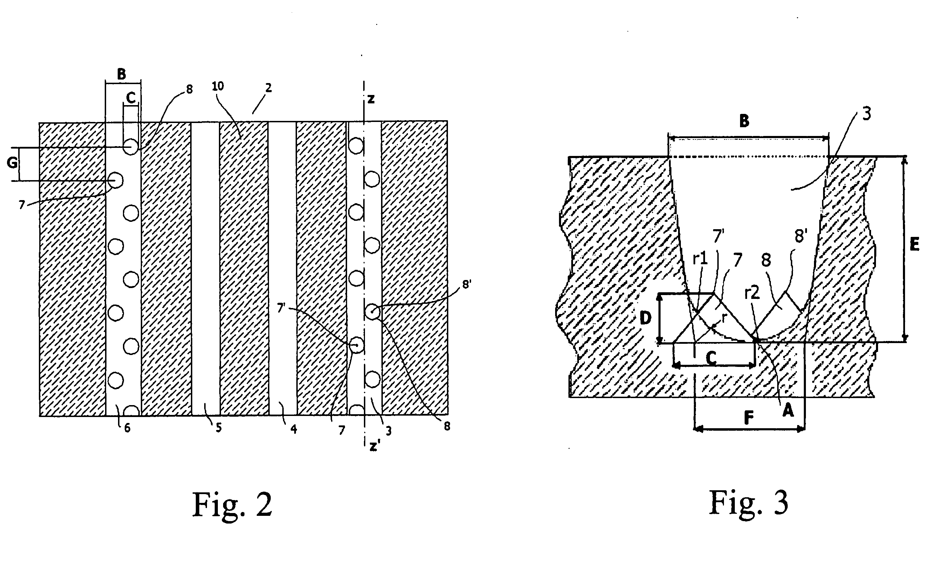

In Figure 2, 2 denotes a tread band of a tyre for the wheels of vehicles according to the present invention, in particular a tyre intended for mounting on the wheels of a heavy vehicle.

The tread band 2 comprises a central annular portion 10 straddling the equatorial plane of the tyre 1 and two opposite annular shoulder portions arranged on axially opposite sides of the central annular portion 10.

The central annular portion 10 of the tread band is delimited by two circumferential central grooves 4 and 5 arranged on axially opposite sides of the equatorial plane.

Two circumferential grooves 3 and 6 are present in the axially outermost portions of the tread band 2.

The circumferential grooves 3, 4, 5 and 6 have a progression substantially parallel to the equatorial plane. Typically they have a width B, measured in the axial direction, which is less than 20 mm and preferably less than 18 mm. Generally the width B measured in the axial direction is greater than 8 mm and preferably greater than 10 mm. The width of the groove B is the width which the groove has in the radially outermost portion of the tread band, i.e. the portion in contact with the road surface.

With reference to Figure 3, the circumferential groove 3 has a bottom width F, measured in the axial direction, which is typically smaller than the width B, in the case where the groove has inclined walls.

The bottom width F, measured in the axial direction, is generally less than 18 mm and preferably less than 16 mm. Preferably, the width F measured in the axial direction is greater than 6 mm. Preferably, it is greater than 8 mm.

As mentioned above, the bottom width F is equal to the segment which is obtained by forming a line tangential to the radially innermost point of the said groove and substantially parallel to the tread band. The segment is obtained by extending the sidewalls of the circumferential groove and intersecting them with the tangential line formed previously.

With reference again to Figure 2, projecting elements 7, 8, belonging to at least two separate pluralities, are present inside the circumferential grooves 3 and 6.

The projecting element 7 of a first plurality and the projecting element 8 of a second plurality have, respectively, top portions 7' and 8' situated on axially opposite sides of the centre line z-z'.

The projecting elements arranged in the two different pluralities, on opposite sides of the centre line, form a substantially winding path inside the circumferential groove. This path is able to ensure expulsion of various material originating from the road surface and maintain a fairly large distance between the projecting elements of different pluralities, so as to limit the formation of cracks and/or tears on the bottom of the groove. Moreover, in the embodiment shown in Figure 2 the projecting elements 7, 8 are set away from the bottom of the groove, which constitutes the most delicate portion most prone to the formation of cracks and/or tears in the groove itself.

In the specific embodiment according to Figure 2, the projecting elements which belong to a given group are situated at the same distance from the wall of the groove 3, 6, i.e. are circumferentially aligned with each other.

The distance G, measured in the circumferential direction, between two consecutive projecting elements may be preferably greater than 10 mm and more preferably greater than 13 mm. The distance G between two consecutive projecting elements may be less than 30 mm and is preferably less than 25 mm.

A distance between projecting elements which is less than 10 mm may cause cracks and/or tears in between adjacent projecting elements. A distance between projecting elements which is greater than 30 mm may reduce the efficiency of expulsion of various material from the road surface.

Many pluralities of projecting elements may be present inside the groove 3.

The projecting elements may have inclined sidewalls. The angle of inclination of the sidewalls with the bottom of the groove is between 25 and 55°.

In the particular embodiment according to Figure 2, the projecting elements 7 of the first plurality alternate, in the circumferential direction, with the projecting elements 8 of the second plurality.

In a particular embodiment (not shown in Figure 2) the projecting elements have forms which are different from each other.

The base dimension C of the projecting elements is preferably smaller than the width F, i.e. the width of the bottom of the groove. More preferably, the base dimension C is less than three quarters of the width F. In preferred embodiments, the base dimension C is less than 16 mm and preferably less than 14 mm. Preferably, the base dimension C is greater than 4 mm and more preferably greater than 6 mm. As mentioned above, the base dimension of a projecting element is obtained by extending the sidewalls of the element and intersecting them with a base segment of the said element. The base segment is obtained by a line substantially parallel to the tread band and passing through the radially innermost point of the said element.

Figure 3 shows a cross-sectional view of the groove 3 of the tread band according to Figure 2.

The circumferential groove 3 (in order to simplify the description only the groove 3 is described, but the characteristics mentioned below are also applicable to the grooves 4, 5, 6 shown in Figure 2) has a depth E ranging between 9 mm and 18 mm. The depth of the groove is the axial distance between the radially innermost point of the groove and the surface of the tread band 2.

The circumferential groove 3 has sidewalls which are inclined with respect to the centre axis of the said circumferential groove.

Generally, the centre axis is the axis which passes through the radially innermost point A of the groove 3 and is substantially perpendicular to the tread.

Preferably, the sidewalls of the circumferential grooves are inclined at an angle less than or equal to 20° with respect to the centre axis of the said groove. Advantageously, the angle of inclination is greater than 5°.

The bottom of the circumferential groove 3 is connected to the sidewalls by a connecting radius r ranging between 2 and 7 mm. These connecting radii prevent the formation of cracks in the portion between the bottom and the sidewalls of the grooves. In a preferred embodiment, the connecting radii on axially opposite sides of the circumferential groove meet at the point A on the bottom of the said groove. Alternatively, the connecting radii connect a flat bottom of the groove to its sidewalls. In this case a single point which is radially more inner lying is not present and the point A is the middle point on the base of the bottom of the groove.

The projecting elements 7 and 8 of the groove 3 belong to two different groups of elements, as described with reference to Figure 2. The top portions 7' and 8' are not aligned with each other, i.e. they are situated at different distances from one of the sidewalls of the groove. The top portions 7' and 8' are situated on opposite sides of the centre line z-z'.

In the particular embodiment according to Figure 3 the projecting elements have a conical shape. Alternatively they may have a frustoconical shape. Preferably the sidewalls of the projecting elements are connected to the top portions of the said elements.

The projecting elements 7 and 8 have a height D which is smaller than the depth E of said circumferential groove and is preferably less than two thirds of the depth E of the groove. The height of a projecting element is the difference in the radial direction between the top portion of the said element and the radially innermost point of the circumferential groove.

Preferably, the height D of the projecting elements is less than 12 mm and more preferably less than 10 mm. The height D is preferably greater than 2 mm and more preferably greater than 4 mm. In the embodiment according to Figure 3 the projecting elements 7 and 8 belonging to two different pluralities have the same height. Preferably said projecting elements have a height greater than or equal to one third of the depth of the circumferential groove 3.

In another embodiment projecting elements belonging to different pluralities have heights different from each other.

The projecting elements are connected to the bottom of the circumferential groove via a connecting radius r2 ranging between 1 and 5 mm.

In the case where they are situated close to the sidewalls of the circumferential groove, the projecting elements are connected to the latter by a connecting radius r1 ranging between 1 and 5 mm. The connection of the projecting elements to the bottom of the groove and to its sidewalls ensures optimum distribution of the forces, preventing the formation of cracks in the zone of contact between projecting elements and circumferential groove.

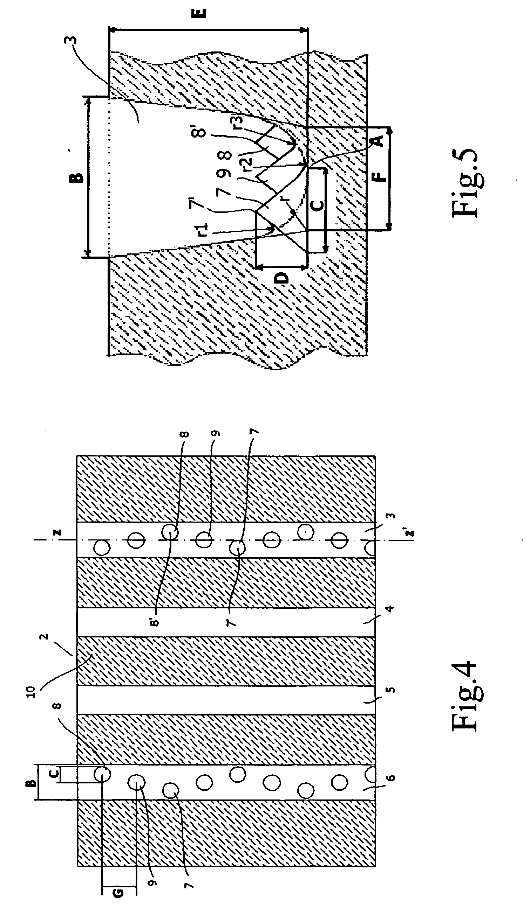

Figure 4 shows a second preferred embodiment of invention. Differently from the embodiment according to Figure 2 described above, three different pluralities of projecting elements are present inside the groove 3. In the embodiment according to Figure 4, the projecting elements which belong to a same plurality are circumferentially aligned with each other. In particular, the projecting elements 9 belonging to the central plurality are aligned on the centre line z-z'. The projecting elements 7 and 8 have top portions 7' and 8' arranged on the opposite side of the axis of symmetry z-z'. The distance G between adjacent projecting elements, and therefore between the elements 7 and 8 and between those 8 and 9, is the same distance described above.

Figure 5 shows a cross-sectional view of the groove 3 of the tread band according to Figure 4.

The element 9 belonging to the group of projecting elements aligned with the centre axis z-z' of the circumferential groove 3 has a connecting radius r3 with the bottom of the groove. This connecting radius r3 ranges between 1 and 5 mm.

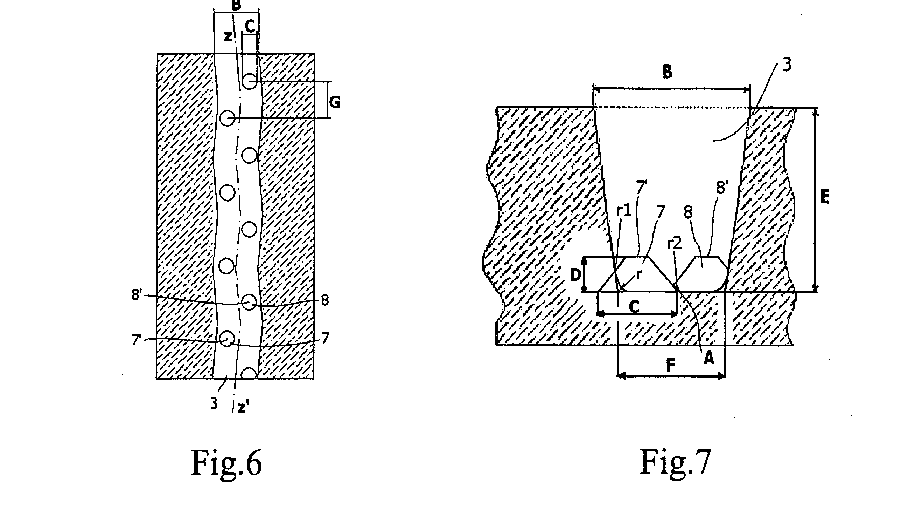

Figure 6 shows a third preferred embodiment of the invention. In particular only one circumferential groove, for example a circumferential shoulder groove 3, is shown. The groove 3 has a zigzag circumferential progression. The constructional solution, differently from that described in Figure 2, has a centre line z-z' with a zigzag circumferential progression, the locus of the points being obtained by joining together the middle points on the bottom of the groove along its length.

In the embodiment according to Figure 6 also the projecting elements 7 and 8 have top portions 7' and 8' situated on opposite sides of the centre line z-z'.

Figure 7 shows a cross-sectional view of the groove 6 of the tread band according to Figure 6. This particular embodiment shows projecting elements which have a frustoconical shape with a height D, as in the previously described examples. This particular embodiment shows a groove with a flat bottom connected to the sidewalls of the said groove. As previously stated, the centre line is defined as the locus of the points obtained by joining together the middle points A on the bottom of the groove along its length.

### EXAMPLE

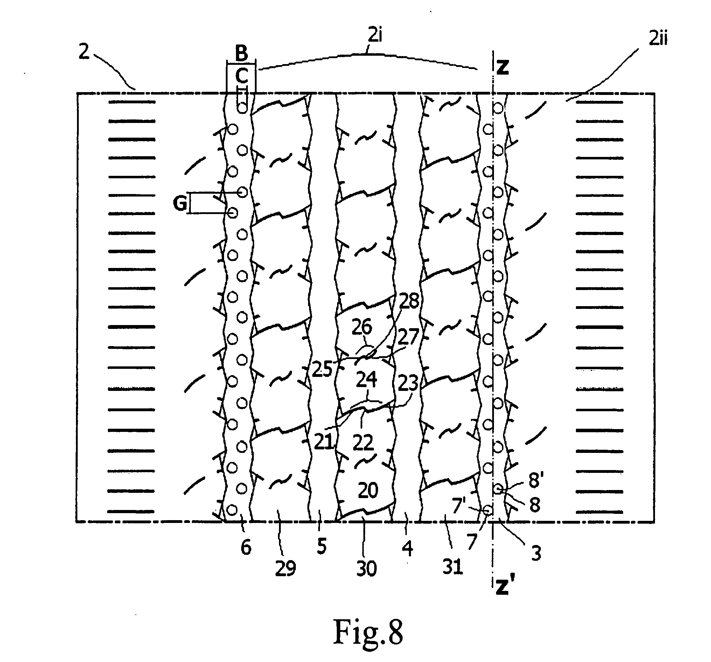

Figure 8 shows a tread pattern of the tyre For25® marketed by the present Applicant, where the projecting elements according to the invention have been added.

The tread band 2 comprises a central annular portion 2i straddling the equatorial plane of the tyre and two opposite annular shoulder portions 2ii arranged on axially opposite sides of the central annular portion 2i.

Each annular shoulder portion 2ii is separated from the central annular portion 2i of the tyre 1 a by a respective circumferential groove 4 and 5.

The annular shoulder portions 2ii of the tread band comprise, moreover, two circumferential grooves 3 and 6 arranged on axially opposite sides of the equatorial plane. Three circumferential rows 29, 30, 31 of blocks 20 are therefore defined on the tread band.

The walls of the circumferential grooves 3, 4, 5, 6 have a zigzag progression.

This tread pattern is particularly suitable for use which is normally defined as motorway or long-distance use.

Each row 29, 30, 31 of blocks 20 has a plurality of transverse sipes 24.

The transverse sipes 24 extend substantially in a direction inclined with respect to the equatorial plane of the tyre.

Particularly, each sipe 24 has a broken line progression. In this way, by providing several gripping edges for each sipe, the tractional power of the tread band 2 is advantageously increased in the direction of travel of the tyre.

In detail, each sipe 24 has two inclined portions 21, 23 and a connecting portion 22 arranged substantially circumferentially.

The blocks 20 are defined in the circumferential direction by the sipes 24 and in the axial direction by two circumferential grooves 3, 4, 5, 6 and have a shape substantially in the form of a parallelogram elongated in the axial direction.

For this purpose, each sipe 24 extends from a circumferential groove 3, 4, 5, 6 as far as the axially consecutive groove.

Each block 20 has an additional transverse sipe 26. More particularly, each sipe 26 has a broken line progression. In this way, by providing several gripping edges for each sipe, the tractional power of the tread band 2 is advantageously increased in the direction of travel of the tyre.

In detail, each sipe 26 has two inclined portions 25, 27 and a connecting portion 28 arranged substantially circumferentially.

Unlike the sipes 24, the sipes 26 do not extend transversely over the entire width of the circumferential rows 29, 30, 31 of blocks 20, their extension being limited to the central portion of each block 20.

The blocks 20 and each of the annular shoulder portions 2ii may have further anti-wear sipes along the circumferential grooves which delimit them in the axial direction.

In one example, the width B of the groove measured in the radially outermost portion of the tread band is equal to 15 mm. The circumferential grooves 3 and 6 have a depth equal to 17 mm.

The circumferential grooves 3, 6 are provided internally with projecting elements able to prevent trapping of various materials (for example grit, stones or pebbles) and ensure immediate release thereof.

Two pluralities of projecting elements are present inside the groove 3. The elements 7 belong to a first plurality and the elements 8 belong to a second plurality. The two pluralities of projecting elements 7 and 8 have, respectively, top portions 7' and 8' arranged on opposite sides of the centre axis z-z' of the groove 3 and 6.

In one example, the projecting elements have a conical shape; the base dimension, i.e. the diameter of the base of these elements, is equal to 10 mm; the projecting elements all have the same height, equal to 4 mm.

The distance, measured in the circumferential direction, between two adjacent elements 7 and 8 is, for example, equal to 14 mm.

The projecting elements are connected to the base of the circumferential groove inside which they are housed. The connecting radius is, for example, equal to 2.5 mm.

The projecting elements are connected to the nearby sidewalls of the circumferential groove inside which they are housed. The connecting radius is, for example, equal to 1.5 mm.

## Claims

1. Tyre (1) for wheels of vehicles, comprising a carcass structure and a tread band (2) comprising at least one circumferential groove (3, 4, 5, 6) having a centre line (z-z'), wherein said circumferential groove (3, 6) has at least one first and at least one second plurality of elements (7, 8) projecting from the bottom of said groove (3, 6), arranged circumferentially, wherein the top portions (7', 8') of said first and said second plurality are arranged on axially opposite sides of the centre line (z-z') of said circumferential groove (3, 6) **characterized in that** said projecting elements (7, 8) have a frustoconical or conical shape, wherein the sidewalls of said projecting elements (7, 8) have an angle of inclination of between 25 and 55° with respect to a plane substantially parallel to the surface of the tread band.

2. Tyre according to claim 1, in which the said projecting elements (7, 8) have a height (D) smaller than the depth (E) of said circumferential groove (3, 6).

3. Tyre according to claim 1 or 2, in which said projecting elements (7, 8) have a height (D) greater than or equal to one third of the depth (E) of said circumferential groove (3, 6).

4. Tyre according to Claim 2 or Claim 3, in which the said projecting elements (7, 8) have a height (D) less than or equal to two thirds of the depth (E) of said circumferential groove (3, 6).

5. Tyre according to any one of the preceding claims, in which the said projecting elements (7, 8) have a base dimension (C) less than or equal to three quarters of the width (F) of the bottom of said groove (3, 6).

6. Tyre according to any one of the preceding claims, in which said projecting elements (7, 8) are connected to the bottom of said groove (3, 6) by a first connecting radius (r2) of between 1 and 5 mm.

7. Tyre according to any one of the preceding claims, in which said projecting elements (7, 8) are connected to the sidewalls of said circumferential groove (3, 6) by a second connecting radius (r1) of between 1 and 5 mm.

8. Tyre according to any one of the preceding claims, in which said projecting elements (7, 8) are present in at least two circumferential grooves ( 3, 6) of said tread band (2).

9. Tyre according to Claim 8, in which said circumferential grooves (3, 6) are axially the outermost grooves of said tread band (2).

10. Tyre according to any one of the preceding claims, in which said projecting elements (7, 8) are distributed substantially along the entire circumferential extension of said groove (3, 6).

11. Tyre according to Claim 10, in which a distance (G) measured in the circumferential direction between two adjacent projecting elements (7, 8) is greater than 10 mm.

12. Tyre according to Claim 10 or Claim 11, in which a distance (G) measured in the circumferential direction between two adjacent projecting elements (7, 8) is less than 30 mm.

## Patentansprüche

1. Reifen (1) für Fahrzeugräder mit einer Karkassenstruktur und einem Laufflächenband (2), das wenigstens eine Umfangsnut (3, 4, 5, 6) mit einer Mittellinie (z-z') aufweist, wobei die Umfangsnut (3, 6) wenigstens eine erste und wenigstens eine zweite Anzahl an Elementen (7, 8), die von dem Grund der Nut (3, 6) hervorragen, umfänglich angeordnet aufweist, wobei die oberen Abschnitte (7', 8') der ersten und zweiten Anzahl an axial gegenüberliegenden Seiten der Mittellinie (z-z') der Umfangsnut (3, 6) angeordnet sind,
**dadurch gekennzeichnet, dass** die vorstehenden Elemente (7, 8) jeweils eine Gestalt eines abgeschnittenen Kegels oder eines Kegels aufweisen, wobei die Seitenwände der vorstehenden Elemente (7, 8) einen Neigungswinkel zwischen 25 und 55° bezüglich einer Ebene im Wesentlichen parallel zu der Oberfläche des Laufflächenbands aufweisen.

2. Reifen nach Anspruch 1, bei dem die vorstehenden Elemente (7, 8) eine Höhe (D) kleiner als die Tiefe (E) der Umfangsnut (3, 6) aufweisen.

3. Reifen nach Anspruch 1 oder 2, bei dem die vorstehenden Elemente (7, 8) eine Höhe (D) größer oder gleich einem Drittel der Tiefe (E) der Umfangsnut (3, 6) aufweisen.

4. Reifen nach Anspruch 2 oder Anspruch 3, bei dem die vorstehenden Elemente (7, 8) eine Höhe (D) kleiner oder gleich zwei Dritteln der Tiefe (E) der Umfangsnut (3, 6) aufweisen.

5. Reifen nach einem der vorhergehenden Ansprüche, bei dem die vorstehenden Elemente (7, 8) eine Basisabmessung (C) kleiner oder gleich drei Vierteln der Breite (F) des Grunds der Nut (3, 6) aufweisen.

6. Reifen nach einem der vorhergehenden Ansprüche, bei dem die vorstehenden Elemente (7, 8) mit dem Grund der Nut (3, 6) mit einem ersten Verbindungsradius (r2) von 1 bis 5 mm verbunden sind.

7. Reifen nach einem der vorhergehenden Ansprüche, bei dem die vorstehenden Elemente (7, 8) mit den Seitenwänden der Umfangsnut (3, 6) mit einem zweiten Verbindungsradius (r1) von 1 bis 5 mm verbunden sind.

8. Reifen nach einem der vorhergehenden Ansprüche, bei dem die vorstehenden Elemente (7, 8) in wenigstens zwei Umfangsnuten (3, 6) des Laufflächenbands (2) vorhanden sind.

9. Reifen nach Anspruch 8, bei dem die Umfangsnuten (3, 6) axial die äußersten Nuten des Laufflächenbands (2) sind.

10. Reifen nach einem der vorhergehenden Ansprüche, bei dem die vorstehenden Elemente (7, 8) im Wesentlichen entlang der gesamten Umfangserstreckung der Nut (3, 6) verteilt sind.

11. Reifen nach Anspruch 10, bei dem ein Abstand (G), gemessen entlang der Umfangsrichtung, zwischen zwei benachbarten vorstehenden Elementen (7, 8) größer als 10 mm ist.

12. Reifen nach Anspruch 10 oder Anspruch 11, bei dem ein Abstand (G) zwischen zwei benachbarten vorstehenden Elementen (7, 8) weniger als 30 mm, gemessen in der Umfangsrichtung, ist.

## Revendications

1. Pneumatique (1) pour roues de véhicules, comprenant une structure de carcasse et une bande de roulement (2) comprenant au moins une rainure circonférentielle (3, 4, 5, 6) ayant une ligne centrale (z-z'), dans lequel ladite rainure circonférentielle (3, 6) a au moins une première et une deuxième pluralités d'éléments (7, 9)formant saillie à partir du fond de ladite rainure (3, 6), disposée circonférentiellement, dans lequel les parties supérieures (7', 8') desdites première et deuxième pluralités sont disposées sur des côtés opposés axialement de la ligne centrale (z-z') de ladite rainure circonférentielle (3, 6),
**caractérisé en ce que** lesdits éléments en saillie (7, 8) ont une forme tronconique ou conique, dans lequel les parois desdits éléments en saillie (7, 8) ont un angle d'inclinaison entre 25 et 55° par rapport à un plan sensiblement parallèle à la surface de la bande de roulement.

2. Pneumatique selon la revendication 1, dans lequel lesdits élémentsen saillie (7, 8) ont une hauteur (D) inférieure à la profondeur (E) de ladite rainure circonférentielle (3, 6).

3. Pneumatique selon la revendication 1 ou 2, dans lequel lesdits éléments en saillie ont une hauteur (D) supérieure ou égale à un tiers de la profondeur (E) de ladite rainure circonférentielle (3, 6).

4. Pneumatique selon la revendication 2 ou la revendication 3, dans lequel lesdits éléments en saillie (7, 8) ont une hauteur inférieure ou égale aux deux tiers de la profondeur (E) de ladite rainure circonférentielle (3, 6).

5. Pneumatique selon l'une quelconque des revendications précédentes, dans lequel lesdits éléments en saillie (7, 8) ont une dimension de base (C) inférieure ou égale aux trois quarts de la largeur (F) du fond de ladite rainure (3, 6).

6. Pneumatique selon l'une quelconque des revendications précédentes, dans lequel lesdits éléments en saillie (7, 8) sont reliés au fond de ladite rainure (3, 6) par un premier rayon de liaison (r2) d'environ 1 à5 mm.

7. Pneumatique selon l'une quelconque des revendications précédentes, dans lequel lesdits éléments en saillie (7, 8) sont reliés aux parois de ladite rainure circonférentielle (3, 6) par un deuxième rayon de liaison (r1) d'environ 1 à 5 mm.

8. Pneumatique selon l'une quelconque des revendications précédentes, dans lequel lesdits élémentsen saillie (7, 8), sont présents dans au moins deux rainures circonférentielles (3, 6) de ladite bande de roulement (2).

9. Pneumatique selon la revendication 8, dans lequel lesdites rainures circonférentielles (3, 6) sont axialement les rainures les plus externes de ladite bande de roulement (2).

10. Pneumatique selon l'une quelconque des revendications précédentes, dans lequel lesdits éléments en saillie (7, 8) sont répartis sensiblement le long de l'extension circonférentielle entière de ladite rainure (3, 6).

11. Pneumatique selon la revendication 10, dans lequel une distance (G) mesurée dans la direction circonférentielle entre deux élémentsen saillie adjacents (7, 8) est supérieure à 10 mm.

12. Pneumatique selon la revendication 10 ou la revendication 11, dans lequel une distance (G) mesurée dans la direction circonférentielle entre deux élémentsen saillie adjacents (7, 8) est inférieure à 30 mm.
